# EUROPEAN PATENT SPECIFICATION

(11) **EP 1 894 890 B1**
(45) Date of publication and mention of the grant of the patent: **22.10.2014**
(21) Application number: 05782384.1
(22) Date of filing: 12.09.2005
(51) Int. Cl.: C01G 3/02, C01G 45/02, C01G 1/02, B82B 1/00, C01B 13/32

(54) **TRANSITION METAL OXIDE NANO-TUBE**
ÜBERGANGSMETALLOXID-NANORÖHRE
NANOTUBE D OXYDE DE METAL DE TRANSITION

(30) Priority: 24.02.2005 JP 2005048975
(43) Date of publication of application: 05.03.2008
(73) Proprietor: Japan Science and Technology Agency, Kawaguchi-shi, Saitama 332-0012 (JP); National Institute of Advanced Industrial Science and Technology, Tokyo 100-8921 (JP)
(72) Inventor: KOGISO, Masaki, Nat. Inst. of Advanced Ind.S & T, Tsukuba-shi, Ibaraki 3058565 (JP); SHIMIZU, Toshimi, Tsukuba-shi, Ibaraki 3058565 (JP)
(74) Representative: Wilson Gunn
(86) International application number: PCT/JP2005/016732
(87) International publication number: WO 2006/090499

(56) References cited:
- WO-A-2004/092072
- JP-A- 2004 026 509
- JP-A- 2004 026 509
- JP-A- 2004 331 490
- ZHANG J ET AL: "A simple route towards tubular ZnO", CHEMICAL COMMUNICATIONS - CHEMCOM, ROYAL SOCIETY OF CHEMISTRY, no. 3, 7 February 2002 (2002-02-07), pages 262-263, XP002993344, ISSN: 1359-7345
- KOBAYASHI S ET AL: "Preparation of TiO2 Hollow-Fibers Using Supramolecular Assemblies", 20 May 2000 (2000-05-20), CHEMISTRY OF MATERIALS, AMERICAN CHEMICAL SOCIETY, WASHINGTON, US, PAGE(S) 1523 - 1525, XP002393826, ISSN: 0897-4756 * the whole document *
- HARTGERINK J D ET AL: "Peptide-amphiphile nanofibers: a versatile scaffold for the preparation of self-assembling materials", PROCEEDINGS OF THE NATIONAL ACADEMY OF SCIENCES OF USA, NATIONAL ACADEMY OF SCIENCE, WASHINGTON, DC, vol. 99, no. 8, 16 April 2002 (2002-04-16) , pages 5133-5138, XP002972643, ISSN: 0027-8424
- ZHANG J. ET AL: 'A simple route towards tubular ZnO' CHEMICAL COMMUNICATIONS no. 3, 07 February 2002, pages 262 - 263, XP002993344

## Description

### Technical Field

The present invention relates to a method of preparing nano-tubes consisting of a transition metal oxide.

### Background of the Invention

In a conventional method to prepare metal oxide nano-tubes, a two step production process has been used, which comprises (1) forming oxides of metals, such as silicon, titanium, zirconium and the like, on surfaces of rod shaped and hollow fibers formed from lipids and the like as a casting form by using a sol-gel method and (2) sintering the fibers at high temperatures to eliminated the fibers to yield metal oxide nano-tubes (Non-patent Reference 1 and Patent Reference 1).

In addition, some examples in which metal oxide nano-tubes were prepared using a solution method are also known (Non-patent Reference 2). However, metal oxide nano-tubes were formed only from limited transition metals such as zinc and the like.

Simultaneously, the present inventors have been pursuing research and development of nanofibers and hollow nanofibers comprising peptide lipids and transition metals by coordinating the peptide lipids formed by bonding valine, glycine and the like to long chain hydrocarbon groups and a transition metal in water (Patent References 2 and 3 and Non-patent Reference 3).

Patent Reference 1: Japanese Patent Application Public Disclosure No. 2004-026509
Patent Reference 2: Japanese Patent Application Public Disclosure No. 2004-250797
Patent Reference 3: Japanese Patent No. 3560333
Non-patent Reference 1: Nano Letters, 2(1), 17-20, 2002
Non-patent Reference 2: Chem. Commun., 262-263, 2002
Non-patent Reference 3: J. Colloid Interface Sci., 273, 394-399, 2004

Further references include Kobayashi, S. et al. "Preparation of TiO2 Hollow-Fibers Using Supramolecular Assemblies" (Chemistry of Materials, American Chemical Society, 20 May 2000, 1523-1525) and Hartgerink J.D. et al. "Peptide-amphiphile nanofibers: a versatile scaffold for the preparation of self-assembling materials" (Proceedings of the National Academy of Sciences of USA, National Academy of Science, 99(8), 16 April 2002, 5133-5138).

### Problems to be solved by the Invention

Nano-tubes consisting of transition metal oxides have useful properties, and preparations thereof have been investigated by many researchers.

The previous metal oxide nano-tube synthesis methods based on a sol-gel process have not been popular since they were restricted to (Non-patent Reference 1) specific metals such as silicon, titanium, zirconium and the like, and a complicated two step reaction was required. Due to these reasons, transition metal oxide nano-tubes have not been manufactured.

In addition, metal oxide nano-tube synthesis methods based on a solution process were not applicable to versatile transition metals other than limited metals such as zinc and the like (Non-patent Reference 2).

That is, the objective of the present invention is to present nano-tubes consisting of transition metal oxides and a simple method to manufacture them.

### Means to solve the Problems

The present inventors had already developed a technology to synthesize peptide lipid nanofibers on which a variety of transition metal ions are coordinated (Non-patent Reference 3 and Patent Reference 3), but hollow nanofibers consisting of these transition metal ions are not yet available in the world.

The present inventors conducted intensive studies to solve the problem described above. As a result, the present inventors discovered that transition metal oxide tubes could be formed using a one step reaction when hollow nanofibers comprising a peptide lipid and a transition metal are used as self casting forms, the peptide lipid in the hollow nanofibers is decomposed and removed and the transition metal ions are oxidized by sintering at high temperatures. The present invention was completed based on the discovery.

The present invention is a revolutionary invention of discovering a very simple previously desired but not obtainable production method for nano-tubes comprising a transition metal oxide.

Thus, according to the present invention there is provided a method to produce a transition metal oxide nano-tube as set out in Claim 1.

### Advantage of the Invention

The transition metal oxide nano-tubes obtainable by the method of the present invention can be utilized as nano electronic parts and nano magnetic materials in industrial fields such as the electronics, information and electronics fields.

### Brief Description of the Drawings

Figure 1 shows the infrared absorption spectrum of copper oxide nanotubes.
Figure 2 shows the transmission type electron microscope photograph of copper oxide nanotubes.
Figure 3 shows the infrared absorption spectrum of manganese oxide nanotubes.
Figure 4 shows the transmission type electron microscope photograph of manganese oxide nanotubes.

### Detailed Description of the Invention

First, a casting form of hollow nanofibers is formed by allowing a peptide lipid and transition metal ions to coexist in water.

The peptide lipid is represented by the general formula RCO(NHCH₂CO)ₘOH.

In this formula, R is a hydrocarbon group with 6-18 carbon atoms and is preferably a linear hydrocarbon containing side chains with two or fewer carbon atoms. This hydrocarbon group may be saturated or unsaturated. The presence of three or fewer double bonds is preferred when the hydrocarbon group is unsaturated. M represents an integer one to three.

The glycine radical bonded to the hydrocarbon group by a peptide bond plays a unique role in the present invention. The thinking is that the glycine forms a hydrogen bond referred to as a polyglycine (II) type structure (Crick, F.H.C., Rich, A., Nature 1955, 176, 780-781) that assumes a hollow fiber type structure. When the glycine radical is replaced with other amino acids, only fibrous construction materials are formed under ordinary conditions and no hollow fiber type construction material is formed as is formed in the present invention using a glycine radical.

Transition elements are metals from ²¹Sc to ³⁰Zn from ³⁹Y to ⁴⁸Cd and from ⁵⁷La to ⁸⁰Hg, and manganese, iron, cobalt, nickel, copper, zinc, silver, palladium, gold and platinum are preferred. These elements may be used individually or as a mixture of multiple types, but the use of an individual element is preferred.

Casting forms for hollow nanofibers are instantly formed when the peptide lipid and the transition metal ions described above are allowed to coexist in water. More specifically, the peptide lipid described above is first dissolved in water. A carboxylate anion is formed on the lipid terminals by adding a base to the peptide lipid. As the base, relatively strong bases such as alkali metal hydroxides (sodium hydroxide, lithium hydroxide, potassium hydroxide and the like) and tetra-alkyl ammonium hydroxides (tetra-methyl ammonium hydroxide, tetra-ethyl ammonium hydroxide and the like) and the like are suitable. A peptide lipid concentration at this point of 1-50 millimoles/liter is preferred. Now solvents other than water may also be acceptable, but water is most preferred based on the test results available at this time. Next, a transition metal ion is added, and a precursor of any construction that forms a transition metal in water may be used. A transition metal salt is most convenient, and transition metal salts such as hydrochlorides, sulfates, nitrates, acetates and the like may be used.

Carboxylate anions and transition metal ions react immediately in water in the manner described above to form materials in which a peptide lipid and a transition metal are bonded, and the bonded materials are self aggregating. Hollow nanofibers are instantly formed when transition metal ions are added, and the rate at which a transition metal is supplied may be decided appropriately upon observing the formation status of the hollow nanofibers. The temperature at this point may be any temperature, and the reaction proceeds adequately at room temperature

A stable hollow nanofiber is obtained in air by capturing the fibrous substance and air drying or vacuum drying the fiber.

The hollow nanofiber casting forms are thought to comprise compounds represented by the following formula

RCO(NHCH₂CO)ₘOX

(in the formula, R and m are as described above and X represents a transition metal ion) in which a carboxylate anion of a peptide lipid and a transition metal ion are bonded.

The hollow nanofiber casting forms form a layer about 4.4 nm thick wherein the transition metal is coordinated on the outside and the peptide lipid is coordinated on the inside. Hollow nanofibers are constructed by having multiple numbers of layers (about five to ten layers) surround the hollow section. As a result, the film thickness of the tubes is about 20 to 50 nm. The average diameter of the hollow nanofibers is 10 to 1,000 nm, and the average length is 1 to 100 µm.

Next, the hollow nanofiber casting form obtained is sintered for about five hours at 300 to 600°C in a trace air flow, for example, a flow of about 100 ml/minute.

Nano-tubes consisting of transition metal oxide are obtained as a result, and the sizes of the nano-tubes are the same as those of the casting forms with an average diameter of 10 to 1,000 nm and an average length of 1 to 100 µm.

The nano-tubes can be easily observed using an ordinary optical microscope. The structures can be confirmed in further detail by using a laser microscope, an interatomic force microscope and an electron microscope.

The method of the present invention is illustrated in the following Examples, but these Examples are not intended to limit the scope of the present invention

### Production Example 1

Triethylamine [0.31 ml (2.2 millimoles)] was added to 0.57 g (2.2 millimoles) of glycylglycine benzyl ester hydrochloride, and the mixture was dissolved in 10 ml of ethanol. Fifty milliliters of a chloroform solution containing 0.40 g (2 millimoles) of undecane carboxylic acid was added. The mixed solution was cooled to -10°C, and 20 ml of a chloroform solution containing 0.42 g (2.2 millimoles) of 1-ethyl-3-(3-dimethylaminopropyl) carbodiimide hydrochloride was added with cooling. The mixture obtained was agitated a day and a night while allowing the temperature to gradually rise to room temperature. The reaction solution was washed using 50 ml of 10% by weight of an aqueous citric acid solution, 50 ml of 4% by weight of an aqueous sodium bicarbonate solution and 50 ml of water in that order. The solution was subsequently concentrated under reduced pressure, and 0.50 g (60% yield) of N-(glycylglycine benzyl ester) undecane carboxamide was obtained in the form of white solids, The compound [0.42 g (1 millimole)] was dissolved in 100 ml of dimethyl formamide, and catalytic hydrogen reduction was allowed to occur by adding 0.5 g of 10% by weight palladium on carbon as the catalyst. After six hours, the catalyst was separated by filtration using Celite and the solution was concentrated under reduced pressure to obtain 0,16 g (50% yield) of peptide lipid [N-(glycylglycine) undecane carboxamide] in the form of white solids. The physical properties and elemental analysis results for the product are shown below.

| | | | |
|---|---|---|---|
| Melting point: | 160°C | | |
| Elemental analysis: | (C₁₈H₃₀N₂O₄*0.5H₂O): | | |

| | C | H | N |
|---|---|---|---|
| Calculated value (%): | 59.41 | 9.662 | 8.663 |
| Actual value (%): | 60.09 | 9.341 | 8.583 |

### Production Example 2

One millimole of the peptide lipid obtained in Production Example 1 was placed in a jar, and 50 ml of distilled water containing a one fold equivalent of sodium hydroxide [40 mg (1 millimole)] was added. The container was subjected to an ultrasound sonication (a bath type) to dissolve the peptide lipid. The solution became turbid instantly when 50 ml (0.5 millimole) of a 20 millimole/liter solution of copper (II) acetate was added to the aqueous solution at ambient temperature and pressure, and a blue precipitate formed.

The precipitate was examined using infrared absorption spectroscopy. The unique absorption band associated with a carboxylate anion of a peptide lipid sodium salt at 1604 cm⁻¹ disappeared, and the absorption band at 1408 cm⁻¹ made a large shift to around 1419 cm⁻¹. A unique phenomenon observed when a metal ion is coordinated to a carboxylate anion was reflected in the results, and the results proved that the precipitate comprised a peptide lipid and a metal ion. The precipitate was examined using a transmission type electron microscope, and the formation of hollow nanofibers with an average diameter of 10 to 1,000 nm and an average length of 1 to 100 µm comprising a peptide lipid and copper (II) ion was confirmed.

### Production Example 3

One millimole of the peptide lipid obtained in Production Example 1 was placed in a jar, and 50 ml of distilled water containing a one fold equivalent of sodium hydroxide [40 mg (1 millimole)] was added. The container was subjected to an ultrasound sonication (a bath type) to dissolve the peptide lipid. The solution became turbid instantly when 50 ml (0.5 millimole) of 20 millimole/liter of manganese (II) acetate was added to the aqueous solution at ambient temperature and pressure, and a blue precipitate formed.

.The precipitate was examined using infrared absorption spectroscopy. The unique absorption band associated with a carboxylate anion of a peptide lipid sodium salt at 1604 cm⁻¹ disappeared, and the absorption band at 1408 cm⁻¹ made a large shift to around 7.419 cm⁻¹. A unique phenomenon observed when a metal ion is coordinated to a carboxylate anion was reflected in the results, and the results proved that the precipitate comprised a peptide lipid and a metal ion. The precipitate was examined using a transmission type electron microscope, and the formation of hollow nanofibers with an average diameter of 10 to 1,000 nm and an average length of 1 to 100 µm comprising a peptide lipid and manganese (II) ion was confirmed.

### Example 1

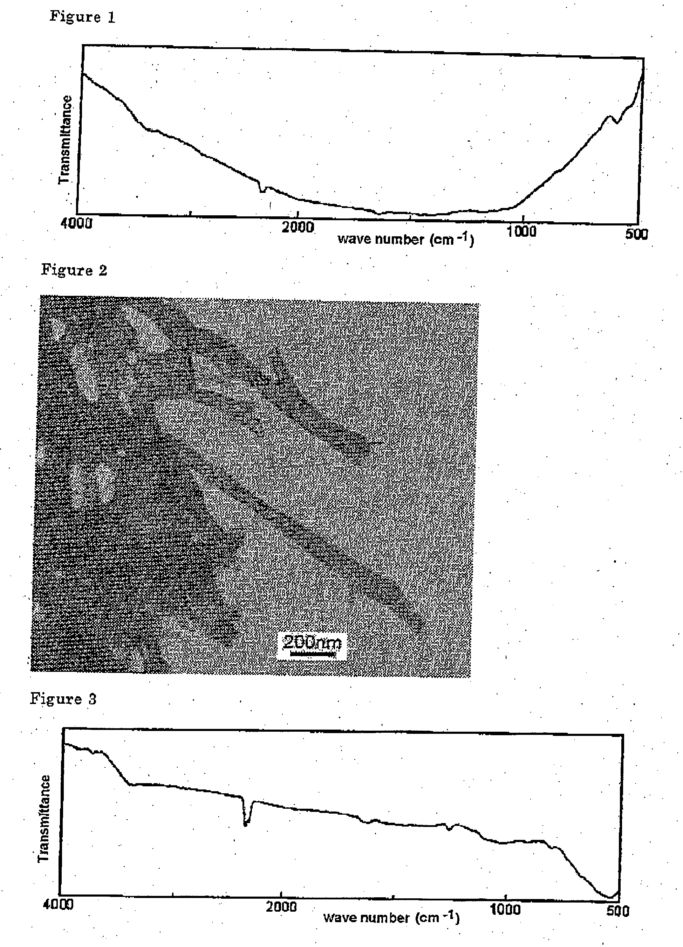

The hollow nanofiber powder comprising peptide lipid and copper obtained in Production Example 2 was heated for four hours at 400°C in a trace flow of air. The gray black powder obtained was examined using infrared absorption spectroscopy, and the results indicated that the peptide lipid was completely decomposed by the heating and had disappeared. The results also indicated that the copper ion was oxidized and copper oxide was formed (Figure 1). Upon examining the product using an electron microscope, the formation of copper oxide tubes with an average diameter of 60 to 100 nm and length of 1 to 10 µm was clearly indicted (Figure 2). The thinking is that hollow nanofibers comprising peptide lipid and copper used themselves as casting forms and formed copper oxide nano-tubes of the same shape.

### Example 2

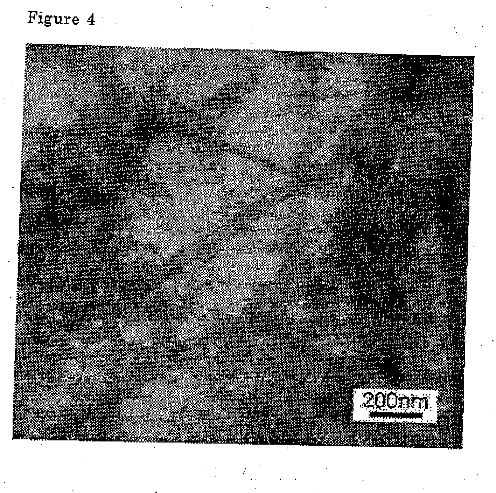

The hollow nanofiber powder comprising peptide lipid and manganese obtained in Production Example 3 was heated for four hours at 400°C in a trace flow of air. The gray black powder obtained was examined using infrared absorption spectroscopy, and the results indicated that the peptide lipid was completely decomposed by the heating and had disappeared. The results also indicated that the manganese ion was oxidized and manganese oxide was formed (Figure 3). Upon examining the product using an electron microscope, the formation of manganese oxide tubes with an average diameter of 50 to 200 nm and length of 1 to 10 µm was clearly indicted (Figure 4). The thinking is that hollow nanofibers comprising peptide lipid and manganese used themselves as casting forms and formed manganese oxide nano-tubes of the same shape.

## Claims

1. A method to produce a transition metal oxide nano-tube, comprising allowing to coexist a peptide lipid represented by the general formula RCO(NHCH₂CO)ₘOH wherein R represents a hydrocarbon group with six to eighteen carbon atoms and m represents an integer one to three, and a transition metal ion in water to form a fibrous substance and sintering the fibrous substance at 300 to 600°C.

2. The method of claim 1, wherein R is a linear hydrocarbon.

3. The method of claims 1 or 2 wherein the transition metal is any one of the metals from ²¹Sc to ³⁰Zn, from ³⁹Y to ⁴⁸Cd and from ⁵⁷La to ⁸⁰Hg or a mixture thereof.

4. The method of any of claims 1 to 3, wherein the transition metal oxide nano-tube consists of transition metal oxide and has an average diameter of 10 to 1,000 nm and an average length of 1 to 100 µm.

## Patentansprüche

1. Verfahren zur Herstellung einer Übergangsmetalloxid-Nanoröhre, umfassend das gleichzeitige Vorliegen eines Peptid-Lipids, welches durch die allgemeine Formel RCO(NHCH₂CO)ₘOH dargestellt wird, wobei R für eine Kohlenwasserstoffgruppe mit 6 bis 18 Kohlenstoffatomen und m für eine ganze Zahl von 1 bis 3 steht, und eines Übergangsmetall-Ions in Wasser zur Bildung eines faserigen Materials und das Sintern des faserigen Materials bei 300 bis 600°C.

2. Verfahren nach Anspruch 1,
wobei R ein linearer Kohlenwasserstoff ist.

3. Verfahren nach Anspruch 1 oder 2,
wobei das Übergangsmetall eines der Metalle von ²¹Sc bis ³⁰Zn, von ³⁹Y bis ⁴⁸Cd und von ⁵⁷La bis ⁸⁰Hg oder eine Mischung dieser ist.

4. Verfahren nach einem der Ansprüche 1 bis 3,
wobei die Übergangsmetalloxid-Nanoröhre aus einem Übergangsmetalloxid besteht und einen durchschnittlichen Durchmesser von 10 bis 1000 nm und eine durchschnittliche Länge von 1 bis 100 µm aufweist.

## Revendications

1. Procédé pour produire un nanotube d'oxyde de métal de transition comportant les étapes consistant à permettre la coexistence d'un peptide liquide représenté par la formule générale RCO(NHCH₂CO)ₘOH, dans laquelle R représente un groupe hydrocarbure ayant six à dix-huit atomes de carbone et m représente un nombre entier 1 à 3, avec un ion de métal de transition dans de l'eau de façon à former une substance fibreuse, puis à fritter la substance fibreuse entre 300 et 600°C.

2. Procédé selon la revendication 1, dans lequel R est un hydrocarbure linéaire.

3. Procédé selon la revendication 1 ou 2, dans lequel le métal de transition est l'un des métaux de ²¹Sc à ³⁰Zn, de ³⁹Y à ⁴⁸Cd et de ⁵⁷La à ⁸⁰Hg ou un mélange de ceux-ci.

4. Procédé selon l'une des revendications 1 à 3, dans lequel le nanotube d'oxyde de métal de transition est composé d' oxyde de métal de transition et a un diamètre moyen compris entre 10 et 1000 nm et une longueur moyenne comprise entre 1 et 100 µm.
